(19) Europäisches Patentamt / European Patent Office / Office européen des brevets

(11) **EP 2 208 716 B1**

## (12) EUROPEAN PATENT SPECIFICATION

(45) Date of publication and mention
of the grant of the patent:
**31.10.2018 Bulletin 2018/44**

(51) Int Cl.:
***C03B 37/014*** (2006.01)

(21) Application number: **09180636.4**

(22) Date of filing: **23.12.2009**

(54) **Method and apparatus for manufacturing optical fiber preform using high frequency induction thermal plasma torch**

Verfahren und Vorrichtung zur Herstellung einer Glasfaservorform mit einem thermischen Hochfrequenzinduktionsplasmabrenner

Procédé et appareil pour la fabrication de préforme de fibre optique utilisant une torche à plasma thermique à induction haute fréquence

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.12.2008 JP 2008333749**

(43) Date of publication of application:
**21.07.2010 Bulletin 2010/29**

(73) Proprietor: **Shin-Etsu Chemical Co., Ltd.
Tokyo 100-0004 (JP)**

(72) Inventors:
• **Otosaka, Tetsuya
Gunma-ken (JP)**
• **Shimizu, Yoshiaki
Gunma-ken (JP)**

(74) Representative: **Michalski Hüttermann & Partner Patentanwälte mbB
Speditionstraße 21
40221 Düsseldorf (DE)**

(56) References cited:
**EP-A2- 1 997 783       JP-A- 7 144 928
JP-A- 61 068 338       JP-A- 63 248 733
US-A- 4 317 667        US-A1- 2008 250 817**

• **BIRYUKOV A S ET AL: "USE OF A MICROWAVE DISCHARGE AT ATMOSPHERIC PRESSURE TO OBTAIN OPTICAL FIBERS WITH FLUOROSILICATE GLASS REFLECTING CLADDING" SOVIET TECHNICAL PHYSICS LETTERS, AMERICAN INSTITUTE OF PHYSICS. NEW YORK, US, vol. 17, no. 3, 1 March 1991 (1991-03-01), page 188/189, XP000242111**

**Description**

BACKGROUND

1. TECHNICAL FIELD

The present invention relates to a method and an apparatus for manufacturing an optical fiber preform using a high frequency induction thermal plasma torch.

2. RELATED ART

A high frequency induction thermal plasma torch is an apparatus provided with a high frequency coil on a periphery of a gas flow tube, and a high frequency current is applied to ionize the gas therein and emit the resulting plasma from a nozzle. Such a high frequency induction thermal plasma torch can achieve extremely high temperatures around 10,000 degrees, has relatively low plasma velocity, and enables free selection of oxidation and reduction atmosphere, and is therefore used as an ultra-high temperature reaction field.

An optical fiber formed by covering a pure silica glass core with a fluorine-doped silica glass cladding is more durable with regard to UV rays and radiation than a commonly used optical fiber that is formed by covering a germanium-doped silica glass core with a pure silica glass cladding. This greater durability is due to the absence of GeO bonding, which has low bonding energy.

Two methods that are known for providing the fluorine-doped silica glass cladding on the core glass include (1) forming a porous glass layer by depositing pure silica glass particles on the periphery of a pure silica glass rod and converting the glass particles into transparent glass in a fluorine atmosphere, as disclosed in Japanese Patent Application Publication No. 4-79981, and (2) using a plasma flame on a periphery of a pure silica glass rod to directly deposit fluorine-doped silica glass, as disclosed in Japanese Patent Application Publication No. 2-47414.

In method (1), the relative refractive index difference $\Delta$ is limited to less than approximately 0.7%, and so method (1) is suitable for achieving favorable throughput and providing a thick cladding layer. Method (2) has inferior throughput compared to method (1), but can acheive a relative refractive index difference $\Delta$ greater than 0.7%. Here, the relative refractive index difference $\Delta$ is defined below in Expression 1.

$$\text{Expression 1: } \Delta = (n_{core} - n_{clad})/n_{core}$$

Here, $n_{core}$ and $n_{clad}$ represent the refractive indices of the core and the cladding.

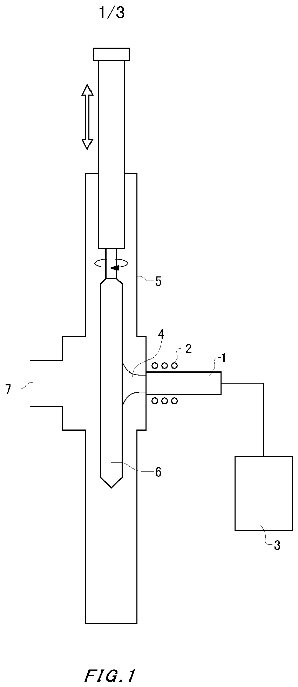

Method (2) is described using Fig. 1. A coil 2 is provided to a plasma torch 1, and when high-frequency power is applied to the coil 2, gas supplied from a gas supply apparatus 3 is ionized in the plasma torch 1 and emitted as a plasma flame 4. The supplied gas may include argon, oxygen, silicon tetrachloride, a glass including fluorine such as silicon tetrafluoride, ethane hexafluoride, and sulfur hexafluoride, and the like.

Fluorine-doped glass particles are generated in the plasma flame 4, and these fluorine-doped glass particles are deposited on a surface of a glass rod 6, i.e. a target, that moves up and down while rotating in a reaction chamber 5. Exhaust gas and glass particles that are not affixed to the glass rod 6 are expelled from the system via an exhaust outlet 7. By repeatedly depositing a thin film of the fluorine-doped glass particles in this way, an optical fiber preform is manufactured having a cladding layer with a desired thickness.

Japanese Patent Application No. 2007-142423 discloses a technique that involves supplying glass particles to a glass rod 6 moving symmetrically forward and backward over a plasma torch 1, only when the glass rod 6 moves forward. The supply of glass raw material is stopped while the glass rod 6 moves backward, and the plasma temperature is lowered and then quickly returned to the original temperature. As a result, the refractive index of the cladding can be stabilized in a longitudinal direction.

The numerical aperture NA of an optical fiber obtained by heating, melting, and drawing a preform is shown below in Expression 2.

$$\text{Expression 2: } NA = (n_{core}^2 - n_{clad}^2)^{1/2}$$

Here, NA is a parameter representing a spread angle of light that can be received by the optical fiber, and so a higher value for NA means that the optical fiber can transmit light received from a larger range of directions. In the optical fiber formed from a pure silica core and fluorine-doped cladding dealt with here, $n_{core}$ is approximately 1.457 and $n_{clad}$ changes according to the fluorine concentration. NA and relative refractive index difference $\Delta$ are correlated with each other, such that NA increases when the relative refractive index difference is greater. Japanese Patent Application No. 05292296 discloses a technique for producing an optical fiber preform. To produce a thermophoresis effect and to increase the deposition rate a cooling inert gas is injected around a fine glass particle-containing flame. The flame is projected from a torch to prevent the diffusion of the fine glass particles in the longitudinal direction of a glass seed rod and keeping a great temperature difference between the surface of a soot deposit and the fine particle.

From JP-A-63248733 it is known to produce the single-mode optical fiber base material capable of obtaining a low-loss optical fiber by depositing the soot resulting from a flame hydrolysis reaction on the outer periphery of the clad glass layer formed on the outer periphery of a core glass rod by a plasma flame. For example, a $GeO_2$ dope

core glass rod having specified outer diameter and specific refractive index difference is used, Ar and $O_2$ are supplied as gaseous plasma, and an electric discharge is generated by a high-frequency coil in the gas current to form a plasma flame. Under such conditions, the glass rod is horizontally moved while being rotated, and the surface of the rod is treated with the plasma flame. $SiCl_4$ and $CCl_2F_2$ as the gaseous reactants and Ar as the carrier are then supplied to the plasma flame, the glass rod is rotated and horizontally moved, and a first clad glass layer is formed on the outer peripheral surface. The $SiO_2$ soot generated by a flame hydrolysis reaction is deposited on the outer periphery of the glass rod by using a quartz burner, and the soot is heated and sintered in a furnace to form a second clad glass layer.

From US-A-4317667 a lightguide starting tube or rod is known which passes through opposed lateral openings in a chamber which contains an oxy-hydrogen torch used to deposit particulate glass on the rod. Laminar flow gas shields are formed about the rod on both sides of said openings to permit the rod to pass therethrough in spaced relation to the openings while sealing said openings to prevent gas or undeposited particulate from passing therethrough and preventing contaminants from entering the chamber.

SUMMARY

The invention is described in claim 1. A preferred embodiment is described in the sub claim.

The method for manufacturing an optical fiber preform according to the present invention involves supplying a high-frequency induction thermal plasma torch with at least glass raw material, dopant raw material, and oxygen, and depositing the glass particles synthesized in the plasma flame onto a surface of a glass rod that moves backward and forward relative to the plasma torch while rotating, wherein deposition of the glass particles is performed while cooling the glass rod.

Examples of techniques for depositing the glass particles while cooling the glass rod include (i) cooling the glass rod by blowing gas on the glass rod and (ii) lowering the temperature around the glass rod by drawing a cool gas into the reaction chamber.

The apparatus for manufacturing an optical fiber preform according to the present invention comprises a rotating and hanging mechanism that hangs and rotates the glass rod in the reaction chamber, a high frequency induction thermal plasma torch that synthesizes glass particles and deposits the glass particles on the glass rod, an exhaust opening that is provided on a side facing the high frequency induction thermal plasma torch and that expels exhaust gas and unaffixed glass particles, and a cooling means that cools the glass rod during deposition.

The cooling means are forced cooling nozzles positioned at heights above and below the plasma flame to blow a gas on the glass rod. Additionally, cool air induction apertures may be positioned at the top and/or bottom of the reaction chamber. It is desirable that the glass particle deposition occur with the manufacturing apparatus being oriented vertically and the glass rod hanging down inside the reaction chamber.

By depositing the glass particles while cooling the glass rod, the present invention can continuously deposit glass doped with a high concentration of fluorine to form a cladding layer having a high fluorine concentration, which improves the relative refractive index of the preform.

The summary clause does not necessarily describe all necessary features of the embodiments of the present invention. The present invention may also be a subcombination of the features described above. The above and other features and advantages of the present invention will become more apparent from the following description of the embodiments taken in conjunction with the accompanying drawings.

BRIEF DESCRIPTION OF THE DRAWINGS

Fig. 1 is a schematic cross-sectional view of an optical fiber preform manufacturing apparatus provided with a conventional high-frequency induction thermal plasma torch.
Fig. 2 shows a relationship between temperature and relative refractive index difference of the glass rod at a variety of plasma powers.
Fig. 3 is a schematic cross-sectional view of an optical fiber preform manufacturing apparatus according to the present invention.

DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

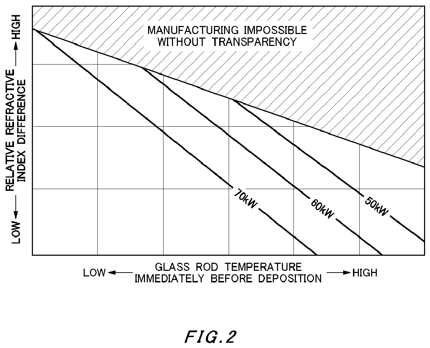

The inventors discovered that the refractive index of a glass film deposited on a glass rod is closely related to plasma power and temperature of the glass rod. In other words, as shown in Fig. 2, when the temperature of the glass rod immediately before deposition is lower or when the plasma power is lower, the concentration of doped fluorine increases, which results in the preform having a higher relative refractive index difference. On the other hand, glass is not formed if the glass rod is below a certain temperature, such that transparent glass is not deposited, and this effect is especially apparent when the plasma power is low.

As the plasma power increases, deposition of the transparent glass becomes easier. However, the temperature of the glass rod rises after deposition, and so it is difficult to achieve high-density fluorine doping when depositing the next layer.

Therefore, the present invention is capable of continuously doping with a high fluorine concentration by performing glass particle deposition with relatively high plasma power while forcefully cooling the glass rod.

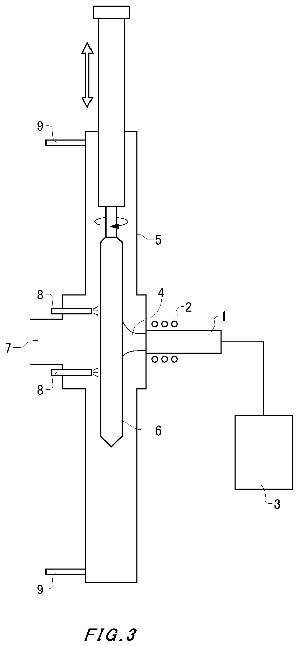

One example of forced cooling of the glass rod 6 involves providing a cooling means, as shown in Fig. 3. Such a cooling means enables continuous deposition of glass particles that are doped with a high concentration of fluorine, while cooling the glass rod 6 by using forced cooling nozzles 8 provided near the upper and lower edges of the plasma flame to blow gas onto the glass rod 6. Furthermore, cool air induction apertures 9 may be provided at the top and/or bottom of the reaction chamber 5 to lower the temperature around the glass rod 6 by drawing a cool gas into the reaction chamber 5.

The same effect can be achieved by using a gas containing fluorine other than the silicon tetrafluoride as the dopant, such as ethane hexafluoride, sulfur hexafluoride, or the like. Even if a dopant other than fluorine is used, similar effects can be achieved as long as the indaction amount of the dopant depends on the temperature of the rod and the plasma power. Hereinafter, some embodiments and a comparative example of the present invention will be described, but the invention is not limited to these embodiments.

First Embodiment

A fluorine-doped quartz glass layer was formed by using a high frequency induction thermal plasma torch to deposit glass particles on a quartz glass rod that has an outer diameter of 50 mm and a length of 1,100 mm and that moves up and down vertically while rotating.

The velocity of the glass rod relative to the plasma torch during forward movement was set to 75 mm/min, and the plasma torch was supplied with argon, oxygen, silicon tetrachloride, and silicon tetrafluoride. Forced cooling nozzles 8 were provided at positions opposite the upper and lower edges of the plasma torch, i.e. near the upper and lower edges of the exhaust outlet 7 provided across from the plasma torch, and each forced cooling nozzle blows room-temperature air at a rate of 30 L/min to cool the upper and lower edges of the portion undergoing deposition. The power supplied to the plasma torch 1 was set to 61 kW, which is the minimum power needed to convert the glass raw material into glass.

The velocity of the glass rod relative to the plasma torch during backward movement was set to 500 mm/min, and the plasma torch was supplied with argon and oxygen, but the silicon tetrachloride and the silicon tetrafluoride, which are the glass raw material and the fluorine source, were not supplied. The power supplied to the plasma torch 1 during the backward movement was set to 8 kW, which is the minimum power needed to safely maintain the plasma.

Under these conditions, a fluorine-doped glass layer was formed by repeated deposition over the course of 50 full trips of the glass rod backward and forward over the plasma torch. Upon analyzing the refractive index distribution of the resulting preform, the relative refractive index difference was found to be 1.62%.

Second Embodiment

The same apparatus as used in the first embodiment was used, but cool air induction apertures 9 were provided at the top and bottom of the reaction chamber 5, and each cool air induction chamber supply air cooled to 10 degrees Celsius at a rate of 200 L/min. Aside from this feature, the same process described in the First Embodiment was used to form a fluorine-doped quartz glass layer on the quartz glass rod. Upon analyzing the refractive index distribution of the resulting preform, the relative refractive index difference was found to be 1.62%.

First Comparative Example

A fluorine-doped quartz glass layer was formed by using a high frequency induction thermal plasma torch to deposit glass particles on a quartz glass rod that has an outer diameter of 50 mm and a length of 1,100 mm and that moves up and down vertically while rotating.

The velocity of the glass rod relative to the plasma torch during forward movement was set to 75 mm/min, and the plasma torch was supplied with argon, oxygen, silicon tetrachloride, and silicon tetrafluoride. The forced cooling nozzles were not provided near the upper and lower borders of the exhaust outlet 7, and room-temperature air flowed into the reaction chamber 5 from the top and bottom thereof at a rate of 100 L/min. The power supplied to the plasma torch was set to 61 kW, which is the minimum power needed to convert the glass raw material into glass.

The velocity of the glass rod relative to the plasma torch during backward movement was set to 500 mm/min, and the plasma torch was supplied with argon and oxygen, but the silicon tetrachloride and the silicon tetrafluoride, which are the glass raw material and the fluorine source, were not supplied. The power supplied to the plasma torch 1 during the backward movement was set to 8 kW, which is the minimum power needed to safely maintain the plasma.

Under these conditions, a fluorine-doped glass layer was formed by repeated deposition over the course of 50 full trips of the glass rod backward and forward over the plasma torch. Upon analyzing the refractive index distribution of the resulting preform, the relative refractive index difference was found to be 1.42%, which is lower than that of the First Embodiment and the Second Embodiment.

As made clear form the above, the present invention can be used to obtain an optical fiber with a large relative refractive index difference $\Delta$.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

**Claims**

1. A method for manufacturing an optical fiber preform, comprising:

synthesizing glass particles including a dopant using a plasma flame (4) generated by a plasma torch (1);

consecutively moving a glass rod (6) forward and backward relative to the plasma flame (4) while rotating;

depositing the glass particles on the glass rod (6) by blowing the glass rod (6) with the plasma flame (4) while the glass rod (6) moves forward relative to the plasma torch (1) and rotates, the plasma torch (1) being supplied with glass raw material and a fluorine source, preferably silicon tetrachloride and silicon tetrafluoride, together with argon and oxygen;

setting the power supplied to the plasma torch (1) to a minimum power needed to safely maintain the plasma and only supplying argon and oxygen without the said glass raw material and without the said fluorine source to the plasma torch (1) while the glass rod (6) moves backward relative to the plasma torch (1) and rotates; and

cooling the glass rod (6) heated by the plasma flame (4) using at least two forced cooling nozzles (8), wherein

the depositing is performed during the cooling, the at least two forced cooling nozzles (8) and an exhaust outlet (7) are provided on the opposite side of the glass rod (6) as the plasma torch (1) and at positions opposite the upper and lower edges of the plasma torch (6), i.e. near the upper and lower edges of the exhaust outlet (7) provided across from the plasma torch (6), and

the cooling includes blowing the glass rod (6) with a gas having a temperature that is lower than the glass rod (6) heated by the plasma flame (4), wherein each forced cooling nozzle (8) blows room-temperature air to cool the upper and lower edges of the portion undergoing deposition.

2. The method according to Claim 1, wherein the cooling includes causing a gas having a temperature that is lower than the glass rod (6) heated by the plasma flame (4) to flow along a surface of the glass rod (6).

**Patentansprüche**

1. Verfahren zum Herstellen einer Vorform einer optischen Faser, mit den Schritten:

Synthetisieren von Glaspartikeln, die einen Dotierstoff enthalten, unter Verwendung einer durch einen Plasmabrenner (1) erzeugten Plasmaflamme (4);

aufeinanderfolgendes Vorwärts- und Rückwärtsbewegen eines Glasstabs (6) relativ zur Plasmaflamme (4) während einer Drehbewegung;

Ablagern der Glaspartikel auf dem Glasstab (6) durch Aufblasen der Plasmaflamme (4) auf den Glasstab (6), während sich der Glasstab (6) relativ zum Plasmabrenner (1) vorwärts bewegt und dreht, wobei dem Plasmabrenner (1) Glasrohmaterial und eine Fluorquelle, vorzugsweise Siliziumtetrachlorid und Siliciumtetrafluorid, zusammen mit Argon und Sauerstoff zugeführt wird;

Einstellen der dem Plasmabrenner (1) zugeführten Leistung auf eine minimale Leistung, die benötigt wird, um das Plasma sicher aufrechtzuerhalten, und Zuführen nur von Argon und Sauerstoff ohne das Glasrohmaterial und ohne die Fluorquelle zum Plasmabrenner (1), während der Glasstab (6) relativ zum Plasmabrenner (1) rückwärts bewegt und gedreht wird; und

Abkühlen des durch die Plasmaflamme (4) erwärmten Glasstabs (6) unter Verwendung mindestens zweier Zwangskühldüsen (8),

wobei das Ablagern während des Abkühlens ausgeführt wird, wobei die mindestens zwei Zwangskühldüsen (8) und ein Abgasauslass (7) auf der bezüglich dem Plasmabrenner (1) gegenüberliegenden Seite des Glasstabs (6) und an Positionen gegenüber dem oberen und dem unteren Rand des Plasmabrenners (6) angeordnet sind, d.h. in der Nähe des oberen und des unteren Rands des Abgasauslasses (7), der sich gegenüberliegend dem Plasmabrenner (6) erstreckt, und

wobei das Abkühlen das Aufblasen eines Gases mit einer Temperatur, die niedriger ist als diejenige des durch die Plasmaflamme (4) erhitzten Glasstabs (6), auf den Glasstab (6) aufweist, wobei jede Zwangskühldüse (8) Luft mit Raumluft aufbläst, um den oberen und den unteren Rand des Abschnitts zu kühlen, in dem eine Ablagerung stattfindet.

2. Verfahren nach Anspruch 1, wobei das Kühlen beinhaltet zu veranlassen, dass ein Gas mit einer Temperatur, die niedriger ist als diejenige des durch die Plasmaflamme (4) erhitzten Glasstabs (6), entlang einer Oberfläche des Glasstabs (6) strömt.

## Revendications

1. Procédé de fabrication d'une préforme de fibre optique comprenant :

   la synthèse de particules de verre incluant un dopant en utilisant une flamme de plasma (4) générée par une torche à plasma (1) ;
   le déplacement de manière consécutive d'une tige en verre (6) vers l'avant et vers l'arrière par rapport à la flamme de plasma (4) pendant la rotation ;
   le dépôt des particules de verre sur la tige en verre (6) en soufflant la tige en verre (6) avec la flamme de plasma (4) pendant que la tige en verre (6) se déplace vers l'avant par rapport à la torche à plasma (1) et est en rotation, la torche à plasma (1) étant alimentée en matière première de verre et en une source de fluor, de préférence, du tétrachlorure de silicium et du tétrafluorure de silicium, conjointement avec de l'argon et de l'oxygène ;
   le réglage de la puissance alimentée au niveau de la torche à plasma (1) à une puissance minimale nécessaire pour maintenir le plasma de manière sécurisée et en alimentant uniquement en argon et en oxygène sans ladite matière première de verre et sans ladite source de fluor au niveau de la torche à plasma (1) tandis que la tige en verre (6) se déplace vers l'arrière par rapport à la torche à plasma (1) et est en rotation ; et
   le refroidissement de la tige en verre (6) chauffée par la flamme de plasma (4) en utilisant au moins deux buses de refroidissement forcé (8), où
   le dépôt est effectué durant le refroidissement, les au moins deux buses de refroidissement forcé (8) et une sortie d'évacuation (7) sont placées sur le côté opposé de la tige en verre (6) par rapport à la torche à plasma (1) et à des positions opposées aux bords supérieur et inférieur de la torche à plasma, c'est-à-dire près des bords supérieur et inférieur de la sortie d'évacuation (7) mise en place à travers la torche à plasma (6), et le refroidissement inclut le soufflage de la tige en verre (6) avec un gaz ayant une température qui est inférieure à la tige en verre (6) chauffée par la flamme de plasma (4), où chaque buse de refroidissement forcé (8) souffle de l'air à température ambiante pour refroidir les bords supérieur et inférieurs de la partie étant soumise au dépôt.

2. Procédé selon la revendication 1, dans lequel le refroidissement inclut le fait de provoquer qu'un gaz ayant une température qui est inférieure à la tige en verre (6) chauffée par la flamme de plasma (4) s'écoule le long d'une surface de la tige en verre (6).

FIG.1

*FIG.2*

FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4079981 A
- JP 2047414 A
- JP 2007142423 A
- JP 05292296 B
- JP 63248733 A
- US 4317667 A